# EUROPÄISCHE PATENTSCHRIFT

(11) **EP 1 182 002 B1**
(45) Veröffentlichungstag und Bekanntmachung des Hinweises auf die Patenterteilung: **03.03.2004**
(21) Anmeldenummer: 00116937.4
(22) Anmeldetag: 05.08.2000
(51) Int. Cl.: B23K 26/14, B23K 26/16

(54) **Laserbearbeitungsmaschine mit wenigstens einem mit einem Spülmedium beaufschlagbaren optischen Element**
Laser processing machine with at least an optical element that can be submitted to a flushing elementing medium
Machine d'usinage au laser avec un composant optique pouvant être soumis a un médium de rinçage

(43) Veröffentlichungstag der Anmeldung: 27.02.2002
(73) Patentinhaber: TRUMPF Werkzeugmaschinen GmbH + Co. KG, 71254 Ditzingen (DE)
(72) Erfinder: Lambert, Martin, 70736 Fellbach (DE)
(74) Vertreter: KOHLER SCHMID + PARTNER

(56) Entgegenhaltungen:
- EP-A- 0 695 600
- WO-A-97/06918
- DE-A- 3 918 363
- US-A- 4 315 133
- PATENT ABSTRACTS OF JAPAN vol. 015, no. 222 (M-1121), 6. Juni 1991 (1991-06-06) & JP 03 066490 A (TOPCON CORP), 22. März 1991 (1991-03-22)
- PATENT ABSTRACTS OF JAPAN vol. 017, no. 123 (M-1380), 15. März 1993 (1993-03-15) & JP 04 305391 A (MIYACHI TEKUNOSU KK;OTHERS: 01), 28. Oktober 1992 (1992-10-28)
- PATENT ABSTRACTS OF JAPAN vol. 017, no. 395 (M-1451), 23. Juli 1993 (1993-07-23) & JP 05 077081 A (MITSUBISHI ELECTRIC CORP), 30. März 1993 (1993-03-30)

## Beschreibung

Die Erfindung betrifft eine Laserbearbeitungsmaschine mit wenigstens einem im Weg eines Laserstrahls angeordneten optischen Element, welches an zumindest einer im Weg des Laserstrahls liegenden Oberfläche über eine Aufgabeeinrichtung in Form einer Düsenanordnung im Wesentlichen gegenströmungsfrei mit einem Spülmedium beaufschlagbar ist, wobei die Düsenanordnung mehrere Düsenkanäle aufweist, die an dem Rand der zu beaufschlagenden Oberfläche entlang nebeneinander liegend münden.

Sich an optischen Elementen der vorstehend genannten Art niederschlagende Ablagerungen, etwa Partikel oder Fasern, können die Funktionsfähigkeit der gesamten Maschine beeinträchtigen. So bewirken die genannten Ablagerungen eine verstärkte Absorption des Laserstrahles durch das betreffende optische Element, welches sich in der Folge zonal oder insgesamt in erheblichem Maße aufheizt. Infolge dieser Aufheizung kann eine unerwünschte Änderung der optischen Eigenschaften des optischen Elementes eintreten, wodurch gegebenenfalls Mängel bei der Führung und/oder Formung des Laserstrahles bedingt werden. In Extremfällen kann die Aufheizung des optischen Elementes zu dessen thermischer Zerstörung führen.

Im Falle des Standes der Technik nach WO 97/06918 ist zum Schutz der Fokussierlinse einer Laserbearbeitungsmaschine eine die Fokussierlinse umschließende Ringdüse vorgesehen, über welche die werkstückseitige Linsenoberfläche zu Reinigungszwecken mit einem Spülgas beschickt werden kann. Das Spülgas wird dabei über den gesamten Rand der betreffenden kreisförmigen Linsenoberfläche radial zu deren Mitte hin gerichtet aufgegeben. Von der Mitte der Linsenoberfläche aus strömt das Spülgas im Wesentlichen senkrecht zu der Linsenoberfläche in Richtung auf das bearbeitete Werkstück ab. Die Druckschrift EP-B-0 695 600 offenbart eine Laserbearbeitungsmaschine, im Falle derer einander entgegengerichtete Spülgasteilströme mit dem Ziel der Erzeugung eines Spülgaswirbels auf die werkstückseitige Oberfläche einer Fokussierlinse aufgegeben werden. Die Achse des erzeugten Spülgaswirbels verläuft dabei in Querrichtung der genannten Linsenoberfläche.

Infolge der bestehenden Strömungsverhältnisse stellt sich an der aus WO 97/06918 vorbekannten Laserbearbeitungsmaschine in der Mitte der beaufschlagten Linsenoberfläche ein Spülgasstau ein. Im Falle des Standes der Technik nach EP-B-0 695 600 befindet sich das zumindest annähernd strömungsfreie Zentrum des erzeugten Spülgaswirbels im zentralen Bereich der vor Ablagerungen zu schützenden Linsenoberfläche. Dementsprechend kann der Spülgasstrom an beiden vorbekannten Laserbearbeitungsmaschinen in der Linsenmitte keine bzw. nur eine eingeschränkte Reinigungswirkung entfalten. Die zentralen Bereiche der Fokussierlinsen können im Falle des Standes der Technik folglich nur mangelhaft vor der Ablagerung von Verunreinigungen geschützt bzw. von bereits vorhandenen Ablagerungen befreit werden. Dies ist umso schwerwiegender, als Laserstrahlen an Laserbearbeitungsmaschinen häufig eine gaußförmige Intensitätsverteilung über den Strahlquerschnitt aufweisen und dementsprechend gerade der zentrale Bereich der Fokussierlinse der Laserbearbeitungsmaschine einer Strahlung hoher Intensität ausgesetzt ist und bei Strahlungsabsorption infolge von Linsenverschmutzungen eine besonders starke Aufheizung erfährt.

Gattungsgemäße Laserbearbeitungsmaschinen sind bekannt aus JP 03 066490 A, JP 04 305391 A, DE 39 18 363 A und US 4,315,133 A.

Gemäß JP 03 066490 A wird die Fokussierlinse einer Laseranordnung über drei Düsenkanäle mit Reinigungsluft beschickt. Die Düsenkanäle sind an dem Rand der Fokussierlinse und dort auf ein und derselben Seite angeordnet. Die aus einem der Düsenkanäle austretende Luft wird an der einen, die den beiden anderen Düsenkanälen entstammende Luft an der anderen Linsenoberfläche entlang geleitet. Die beiden Düsenkanäle, die ein und dieselbe Linsenoberfläche beschicken, sind in Strömungsrichtung konvergierend ausgerichtet.

JP 04 305391 A betrifft eine Laserschweißmaschine mit einem Schweißkopf, der werkstücksseitig mit einem Schutzglas versehen ist. An der Werkstückseite des Schutzglases wird ein gasförmiges Spülmedium in Querrichtung der Laserstrahlausbreitung aufgegeben. Dieses Spülmedium strömt geradlinig an dem Schutzglas entlang und wird seiner Aufgabestelle gegenüberliegend abgeführt.

Ausweislich DE 39 18 363 A weist ein Laserbearbeitungskopf ein optisches Fokussierelement auf, an dessen Werkstückseite mittels eines Düsenrings ein Spülgaswirbel erzeugt wird. Dieser ist von dem optischen Fokussierelement weg gerichtet und verläuft mit seiner Achse in Ausbreitungsrichtung des Laserstrahls.

Ein Spülgaswirbel der aus DE 39 18 363 A bekannten Art ist auch in US 4,315,133 A offenbart. Alternativ beschreibt US 4,315,133 A die Erzeugung von quer zu der Laserstrahlausbreitungsrichtung verlaufenden und sich kreuzenden Druckluftströmungen an der Werkstückseite der Fokussierlinse eines Laserbearbeitungskopfes.

Die vorliegenden Erfindung hat sich zum Ziel gesetzt, eine Laserbearbeitungsmaschine zu schaffen, im Falle derer ein oder mehrere im Weg eines Laserstrahls angeordnete optische Elemente wirksam und zuverlässig vor Ablagerungen geschützt sind bzw. von bereits vorhandenen Ablagerungen gereinigt werden.

Erfindungsgemäß gelöst wird diese Aufgabe durch die Merkmalskombination von Patentanspruch 1. Durch die im Wesentlichen gegenströmungsfreie Beaufschlagung der betreffenden Oberfläche mit Spülmedium wird die Bildung von Staupunkten in dem erzeugten Strömungsfeld zumindest weitgehend verhindert und mithin in allen relevanten Oberflächenbereichen eine Strömungsgeschwindigkeit des Spülmediums gewährleistet, die ausreichend ist, die Ablagerung von Verunreinigungen zu verhindern bzw. vorhandene Verunreinigungen zu entfernen. Anspruchsgemäße Düsenkanäle bieten beispielsweise über ihre Ausrichtung und/oder über ihre Dimensionierung eine einfache Möglichkeit zur Erzeugung einer zweckentsprechenden Strömung des Spülmediums an der zu beaufschlagenden Oberfläche. In diesem Sinne sind im Falle der Erfindung die durchströmten Düsenkanäle der Düsenanordnung in Strömungsrichtung divergierend und in ihrer Verlängerung in Strömungsrichtung entlang der zu beaufschlagenden Oberfläche fächerartig verlaufend ausgerichtet.

Der an sich nutzbare Strömungsquerschnitt der erfindungsgemäßen Aufgabeeinrichtung kann sich entweder über einen Teil des Randes der zu beaufschlagenden Oberfläche oder aber an der gesamten zu beaufschlagenden Oberfläche entlang erstrecken. Der zum Spülen der zu beaufschlagenden Oberfläche tatsächlich genutzte, von Spülmedium durchströmte Strömungsquerschnitt wird in beiden Fällen derart gewählt, dass sich eine gegenströmungsfreie Beaufschlagung der betreffenden Oberfläche jedenfalls in dem oder den neuralgischen Bereichen ergibt.

Erfindungsgemäß wird stets darauf geachtet, dass sich an der zu beaufschlagenden Oberfläche des betreffenden optischen Elementes möglichst flächendeckend ausreichende und/oder einheitliche Strömungsgeschwindigkeiten des Spülmediums ergeben.

Das kennzeichnende Merkmal von Patentanspruch 2 etwa bewirkt, dass mit einheitlichen Geschwindigkeiten aus den einzelnen Düsenkanälen der Düsenanordnung austretende Teilströme des Spülmediums bei ihrer Vereinigung an der zu beaufschlagenden Oberfläche nach wie vor eine einheitliche Strömungsgeschwindigkeit besitzen und infolgedessen keine unerwünschten Verwirbelungen auftreten. Düsenkanäle mit Kreisquerschnitt zu erstellen, wie dies in Patentanspruch 4 angegeben ist, empfiehlt sich auch aus fertigungstechnischen Gründen. So lassen sich derartige Düsenkanäle auf einfache Art und Weise durch Bohren herstellen.

Das in vorteilhafter Weiterbildung der Erfindung vorgesehene kennzeichnende Merkmal von Patentanspruch 5 betrifft eine einfache konstruktive Möglichkeit zur Abdichtung des Bereiches der mit Spülmedium zu beaufschlagenden Oberfläche des betreffenden optischen Elementes gegen den Umgebungsbereich. Eine derartige Abdichtung kann aus den verschiedensten Gründen geboten sein. So lässt sich durch die erfindungsgemäße Einfassung beispielsweise das Eindringen von Verunreinigungen in den Bereich der im Wege des Laserstrahles liegenden und mit Spülmedium zu beaufschlagenden Oberfläche verhindern. Darüber hinaus bietet die genannte Einfassung gegebenenfalls eine einfache Möglichkeit zur Unterbringung der Düsenkanäle einer erfindungsgemäßen Düsenanordnung. In ihrer Formgebung ist die erfindungsgemäße Einfassung zweckmäßigerweise an die Form des Umrisses der mit Spülmedium zu beaufschlagenden Oberfläche angepasst.

Als Spülmedium ist grundsätzlich jedes strömungsfähige Medium denkbar, mittels dessen sich ohne wesentliche Beeinflussung der Maschinenfunktion, etwa ohne nennenswerte Beeinflussung der optischen Eigenschaften des betreffenden optischen Elementes dessen zu beaufschlagende Oberfläche reinigen bzw. vor Verunreinigung schützen lässt. Die Patentansprüche 6 und 7 beschreiben erfindungsgemäße Maßnahmen, die im Falle von Laserbearbeitungsmaschinen mit einem gasgefüllten Strahlführungsraum von besonderem Vorteil sind. Als Spülmedium wird dabei ebenso wie als den Strahlführungsraum füllendes Gas vorzugsweise Stickstoff oder Druckluft verwendet. Gemäß Patentanspruch 7 besteht die Möglichkeit, das Spülmedium gleichzeitig gesteuert dazu zu verwenden, den gewünschten Innendruck des Strahlführungsraumes einzustellen, beispielsweise zu diesem Zweck Leckageverluste von den Strahlführungsraum füllendem Gas auszugleichen.

In erster Linie ist erfindungsgemäß als optisches Element mit einer mit Spülmedium beaufschlagbaren Oberfläche ein Auskoppelspiegel an dem Laserresonator und/oder wenigstens ein Umlenkspiegel und/oder wenigstens eine Fokussierlinse der Laserbearbeitungsmaschine vorgesehen (Patentanspruch 8).

Nachfolgend wird die Erfindung anhand beispielhafter schematischer Darstellungen näher erläutert. Es zeigen:
- Fig. 1: eine mit einem Spülmedium beaufschlagbare Fokussierlinse einer Laserschneidmaschine an einer Linsenhalterung,
- Fign. 2 und 3: stark schematisierte Darstellungen der Strömungsverhältnisse an der Fokussierlinse gemäß Fig. 1,
- Fig. 4: die Anordnung gemäß Fig. 1 integriert in den Schneidkopf einer Laserschneidmaschine,
- Fig. 5: einen mit einem Spülmedium beaufschlagbaren Umlenkspiegel für den Laserstrahl einer Laserschneidmaschine an einer Spiegelhalterung und
- Fig. 6: einen mit einem Spülmedium beaufschlagbaren Auskoppelspiegel eines Laserresonators einer Laserschneidmaschine an einer Spiegelhalterung.

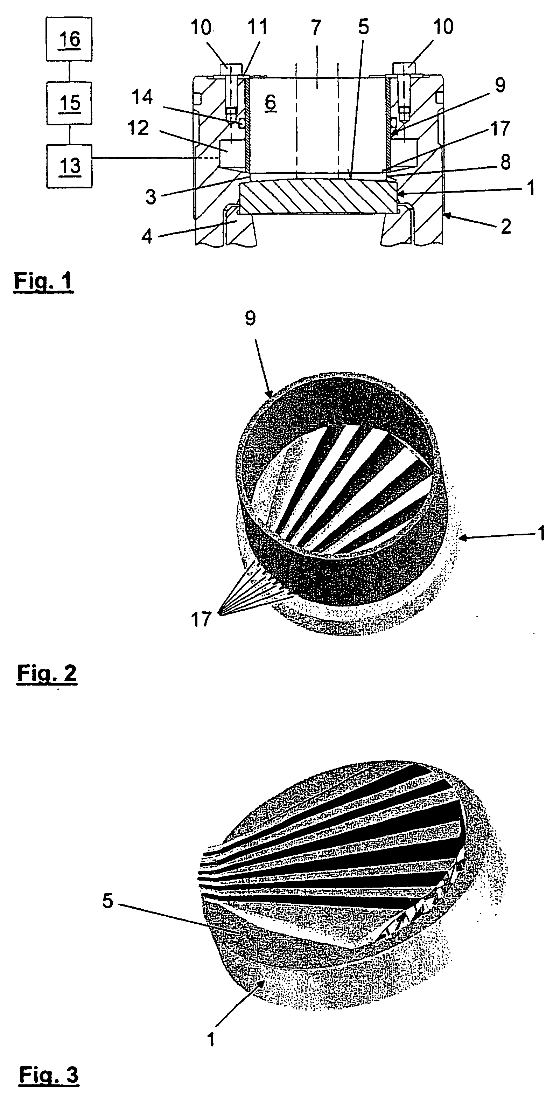

Gemäß Fig. 1 ist ein optisches Element in Form einer Fokussierlinse 1 einer Laserschneidmaschine in herkömmlicher Art und Weise an einer Linsenhalterung 2 gelagert. Einerseits stützt sich die Fokussierlinse 1 dabei an einer Ringschulter 3 der Linsenhalterung 2 ab; andererseits ist die Fokussierlinse 1 mittels eines Schraubringes 4 eingespannt.

Mit einer in Fig. 1 oben liegenden gekrümmten Oberfläche 5 begrenzt die Fokussierlinse 1 einen zylindrischen Innenraum 6 an der Linsenhalterung 2. Der zylindrische Innenraum 6 ist Teil eines mit Stickstoffgas gefüllten Strahlführungsraumes der ausschnittweise gezeigten Laserschneidmaschine. Ein Laserstrahl 7, der ausgehend von einem Laserresonator zu der Fokussierlinse 1 hin geführt wird, ist in Fig. 1 angedeutet.

Die achsparallele Wand des zylindrischen Innenraumes 6 wird gebildet von einer Stirnfläche 8 der Ringschulter 3 sowie der Innenwand eines kreiszylindrischen Düsenringes 9. Letzterer umschließt als Einfassung die Oberfläche 5 der Fokussierlinse 1 und sitzt an seiner Unterseite dicht auf der Ringschulter 3 der Linsenhalterung 2 auf. Für den dichten Anschluss des Düsenringes 9 an die Ringschulter 3 sorgen Spannschrauben 10, mittels welcher der Düsenring 9 an seinem von der Ringschulter 3 abliegenden axialen Ende über einen Stützring 11 beaufschlagt wird.

Radial außerhalb des Düsenringes 9 ist ein Ringkanal 12 in die Linsenhalterung 2 eingearbeitet. Der Ringkanal 12 verläuft über den gesamten Umfang des Düsenringes 9 und steht mit einer externen Quelle für Stickstoffgas in Form einer bezüglich des erzeugten Gasdruckes einstellbaren Stickstoffgaspumpe 13 in Verbindung. Zur Abdichtung des Düsenringes 9 gegen die Linsenhalterung 2 ist ein in eine entsprechende Nut der Linsenhalterung 2 eingelegter O-Ring 14 vorgesehen. Die Stickstoffgaspumpe 13 steht über eine Maschinensteuerung 15 mit einer Vorrichtung 16 zur Überwachung des Innendruckes des gasgefüllten Strahlführungsraumes der Laserschneidmaschine in Verbindung.

Wie insbesondere aus Fig. 2 hervorgeht, ist der Düsenring 9 über einen Teil des Randes der Oberfläche 5 der Fokussierlinse 1 mit Düsenkanälen 17 versehen. Diese münden zu der Oberfläche 5 der Fokussierlinse 1 hin nebeneinander liegend und dienen zur Beaufschlagung der Oberfläche 5 mit Spülmedium in Form von ausgehend von der Stickstoffgaspumpe 13 u.a. über den Ringkanal 12 zugeführtem Stickstoffgas.

Die Düsenkanäle 17 sind bohrend hergestellt worden und besitzen dementsprechend Kreisquerschnitt. Sie sind ausweislich Fig. 1 in ihrem Verlauf gegen die Horizontale geneigt und tangential auf die Mitte der Oberfläche 5 der Fokussierlinse 1 gerichtet. Ihre Querschnittsflächen stimmen überein. Gemäß den Fign. 2 und 3 verlaufen die Düsenkanäle 17 in Strömungsrichtung divergierend und in ihrer Verlängerung in Strömungsrichtung fächerartig an der Oberfläche 5 der Fokussierlinse 1 entlang.

Das auf die Oberfläche 5 der Fokussierlinse 1 aufzugebende Stickstoffgas steht in dem Ringkanal 12 außerhalb des Düsenringes 9 mit einem Druck von etwa 2,0 bar an. In dem zylindrischen Innenraum 6 an der Linsenhalterung 2 herrscht der Innendruck des gasgefüllten Strahlführungsraumes der Laserschneidmaschine, der geringfügig über dem Atmosphärendruck liegt. Infolge des Druckunterschiedes beidseits der Wandung des Düsenringes 9 strömt das Stickstoffgas aus dem Ringkanal 12 mit Schallgeschwindigkeit in den zylindrischen Innenraum 6 im Innern des Düsenringes 9 ein. Unmittelbar an den zu der Oberfläche der Fokussierlinse 1 hin gelegenen Mündungen der Düsenkanäle 17 erweitem sich die letztere durchsetzenden Teilströme des Stickstoffgases zunächst kegelförmig. Infolgedessen und aufgrund der in Fig. 1 erkennbaren Abschrägung der Ringschulter 3 zu der Fokussierlinse 1 hin sowie aufgrund der gewählten Neigung der Düsenkanäle 17 gegen die Horizontale trifft Stickstoffgas in radialer Richtung des zylindrischen Innenraumes 6 gesehen auch mit geringem Abstand von der achsparallen Wand des zylindrischen Innenraumes 6 auf die Oberfläche 5 der Fokussierlinse 1 auf. Dementsprechend kann nur eine extrem kleine Randzone der Oberfläche 5 unterhalb der Mündungen der Düsenkanäle 17 nicht mit Spülmedium erreicht werden. Infolge der Divergenz der Düsenkanäle 17 ergibt sich das in den Fign. 2 und 3 veranschaulichte fächerförmige Profil der die Oberfläche 5 der Fokussierlinse 1 überstreichenden Stickstoffgasströmung. In Fig. 3 ist dabei die Überlagerung der aus den einzelnen Düsenkanälen 17 austretenden Teilströme erkennbar. Die durch Vereinigung dieser Teilströme erzeugte Stickstoffgasströmung bewegt sich großflächig und mit verhältnismäßig hoher Geschwindigkeit über die Oberfläche 5 der Fokussierlinse 1. Da die Mündungen der Düsenkanäle 17 an der zu der Oberfläche 5 der Fokussierlinse 1 hin weisenden Seite des Düsenringes 9 nur über ein kleinwinkeliges Segment des Düsenringes 9 angeordnet sind, liegen die genannten Mündungen der Düsenkanäle 17 in Strömungsrichtung gesehen ungeachtet der Zylinderform des Düsenringes 9 nahezu auf einer Höhe. Dies führt dazu, dass die aus den einzelnen Düsenkanälen 17 austretenden Stickstoffgas-Teilströme bei ihrer Vereinigung eine annähernd einheitliche Geschwindigkeit aufweisen. Unerwünschte Verwirbelungen der Gesamtströmung werden dadurch vermieden. Aufgrund der einseitigen Aufgabe des Stickstoffgases an dem Rand der Oberfläche 5 der Fokussierlinse 1 ist die Stickstoffgasströmung auf der Oberfläche 5 im Wesentlichen gegenströmungsfrei.

Alles in allem ergibt sich an der Oberfläche 5 der Fokussierlinse 1 eine Stickstoffgasströmung, die geeignet ist, die Oberfläche 5 insbesondere in der dem Laserstrahl 7 ausgesetzten Zone von strahlabsorbierenden Ablagerungen freizuhalten bzw. von vorhandenen Ablagerungen zu reinigen.

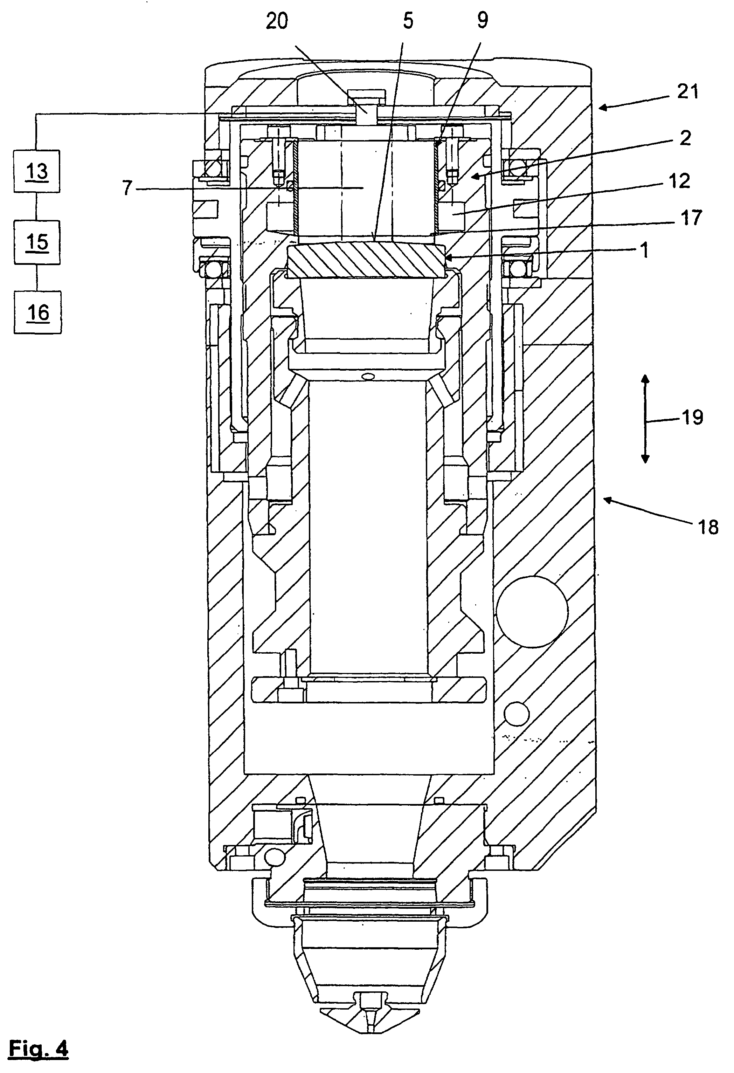

Gemäß Fig. 4 ist die Linsenhalterung 2 mit der Fokussierlinse 1 an einem Schneidkopf 18 der Laserschneidmaschine in Richtung eines Doppelpfeils 19 beweglich geführt. Diese Beweglichkeit der Fokussierlinse 1 dient in bekannter Weise der Einstellung der Fokuslage des Laserstrahles 7 gegenüber dem zu bearbeitenden Werkstück. Der Ringkanal 12 an der Außenseite des Düsenringes 9 ist über ein in Fig. 4 andeutungsweise erkennbares Tauchrohr 20 an einem Gehäuse 21 des Schneidkopfes 18 an die Stickstoffgaspumpe 13 angeschlossen. Das Tauchrohr 20 mündet unabhängig von der Position des Ringkanales 12 in Richtung des Doppelpfeiles 19 in den Ringkanal 12 und stellt dadurch ungeachtet etwaiger Fokuslagenänderungen die Verbindung zwischen der Stickstoffgaspumpe 13 und dem Ringkanal 12 her.

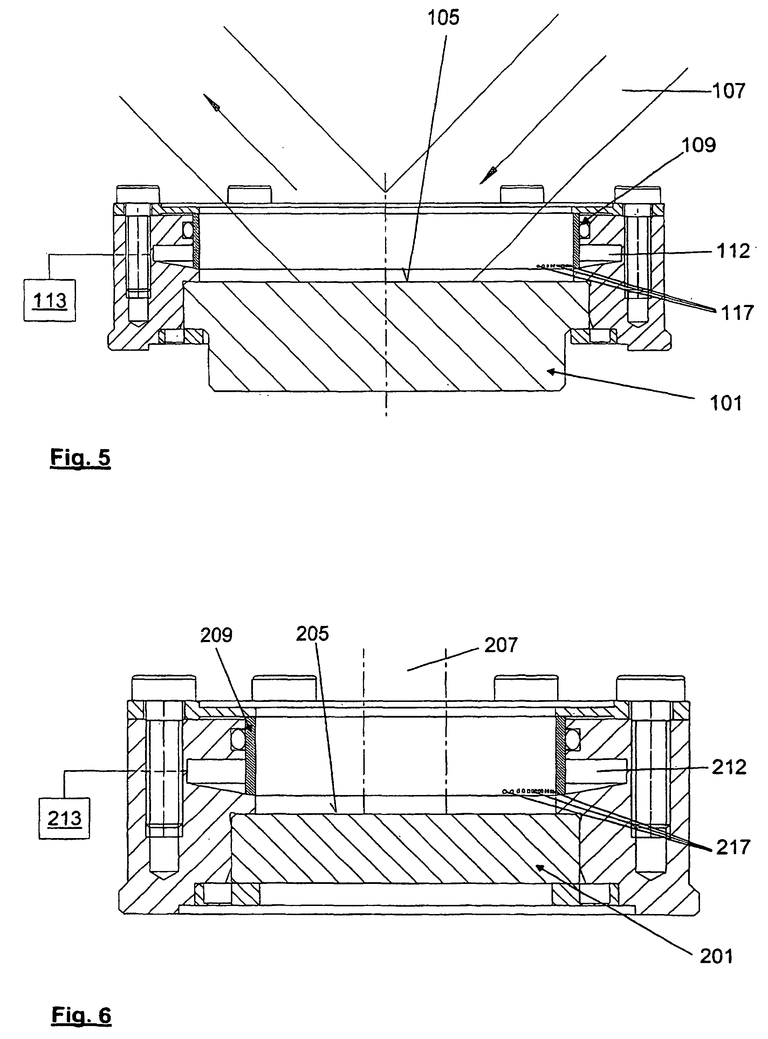

Gemäß Fig. 5 ist ein optisches Element in Form eines Umlenkspiegels 101 zur Umlenkung eines Laserstrahls 107 ebenfalls mit Stickstoffgas als Spülmedium beaufschlagbar. Entsprechend den konstruktiven Merkmalen der Anordnung nach den Fign. 1 bis 4 erfolgt an dem Umlenkspiegel 101 die Zufuhr des Spülmediums auf eine zu beschickende Oberfläche 105 ausgehend von einer Stickstoffgaspumpe 113 über einen Ringkanal 112 sowie Düsenkanäle 117 an einem als Einfassung für die Oberfläche 105 dienenden Düsenring 109. Im Übrigen, insbesondere hinsichtlich der Ausrichtung und der Anordnung der Düsenkanäle 117 sowie der Strömungsverhältnisse an der Oberfläche 105 kann auf die obigen Ausführungen zu den Fign. 1 bis 4 verwiesen werden.

Entsprechend kann auf die vorstehenden Ausführungen Bezug genommen werden zur grundsätzlichen Beschreibung von Aufbau und Funktionsweise der in Fig. 6 gezeigten Anordnung. Diese umfasst als optisches Element einen Auskoppelspiegel 201, wie er üblicherweise an einem Laserresonator einer Laserbearbeitungsmaschine zur Auskoppelung eines erzeugten Laserstrahles 207 vorgesehen ist. Von Ablagerungen zu reinigen bzw. vor Ablagerungen zu schützen ist dabei eine Oberfläche 205, die zu diesem Zweck mit Spülmedium beschickt wird, welches aus einer externen Stickstoffgaspumpe 213 stammt und u.a. über einen Ringkanal 212 sowie Düsenkanäle 217 an einem die Oberfläche 205 einfassenden Düsenring 209 zugeführt wird. Abweichend von den vorstehend beschriebenen Verhältnissen variieren die Düsenkanäle 217 allerdings hinsichtlich ihrer Querschnittsform.

In allen gezeigten Beispielsfällen kann das verwendete Spülmedium beispielsweise dazu genutzt werden, an dem betreffenden Strahlführungsraum auftretende Leckageverluste von den Strahlführungsraum füllendem Gas auszugleichen. Im Falle der Anordnung nach den Fign. 1 bis 4 wird der Innendruck des Strahlführungsraumes mittels der Vorrichtung 16 überwacht. Bei unerwünschtem Druckabfall generiert die Vorrichtung 16 ein Signal an die Maschinensteuerung 15. Diese wiederum steuert daraufhin die Stickstoffgaspumpe 13 im Sinne einer entsprechenden Erhöhung des Druckes des zugeführten Stickstoffgases an. Infolge der Druckerhöhung wird dem Strahlführungsraum der Laserschneidmaschine dann eine Menge an Spülmedium zugeführt, die ausreicht, die festgestellten Leckageverluste auszugleichen.

## Patentansprüche

1. Laserbearbeitungsmaschine mit wenigstens einem im Weg eines Laserstrahls (7, 107, 207) angeordneten optischen Element (1, 101, 201), welches an zumindest einer im Weg des Laserstrahls (7, 107, 207) liegenden Oberfläche (5, 105, 205) über eine Aufgabeeinrichtung in Form einer Düsenanordnung im Wesentlichen gegenströmungsfrei mit einem Spülmedium beaufschlagbar ist, wobei die Düsenanordnung mehrere Düsenkanäle (17, 117, 217) aufweist, die an dem Rand der zu beaufschlagenden Oberfläche (5, 105, 205) entlang nebeneinander liegend münden, **dadurch gekennzeichnet, dass** die durchströmten Düsenkanäle (17, 117, 217) der Düsenanordnung in Strömungsrichtung divergierend und in ihrer Verlängerung in Strömungsrichtung entlang der zu beaufschlagenden Oberfläche (5, 105, 205) fächerartig verlaufend ausgerichtet sind.

2. Laserbearbeitungsmaschine nach Anspruch 1, **dadurch gekennzeichnet, dass** die Mündungen der Düsenkanäle (17, 117, 217) an dem Rand der zu beaufschlagenden Oberfläche (5, 105, 205) in Strömungsrichtung gesehen im Wesentlichen auf derselben Höhe liegen.

3. Laserbearbeitungsmaschine nach einem der vorhergehenden Ansprüche, **dadurch gekennzeichnet, dass** die Düsenkanäle (217) hinsichtlich Form und/oder hinsichtlich Größe uneinheitliche Querschnitte aufweisen.

4. Laserbearbeitungsmaschine nach einem der vorhergehenden Ansprüche, **dadurch gekennzeichnet, dass** Düsenkanäle (17, 117, 217) mit Kreisquerschnitt vorgesehen sind.

5. Laserbearbeitungsmaschine nach einem der vorhergehenden Ansprüche, **dadurch gekennzeichnet, dass** der Strömungsquerschnitt der Düsenkanäle (17, 117, 217) der Düsenanordnung, an einer die zu beaufschlagende Oberfläche (5, 105, 205) umschließenden Einfassung (9, 109, 209) vorgesehen ist bzw. sind.

6. Laserbearbeitungsmaschine nach einem der vorhergehenden Ansprüche, **dadurch gekennzeichnet, dass** die zu beaufschlagende Oberfläche (5, 105, 205) in einem gasgefüllten Führungsraum für den Laserstrahl (7, 107, 207) (Strahlführungsraum) liegt und dass als Spülmedium Gas der den Strahlführungsraum füllenden Art vorgesehen ist.

7. Laserbearbeitungsmaschine nach einem der vorhergehenden Ansprüche, **dadurch gekennzeichnet, dass** eine Vorrichtung zur Regelung des Druckes des Spülmediums sowie eine Vorrichtung (16) zur Überwachung des Innendruckes des gasgefüllten Strahlführungsraumes vorgesehen sind und dass die letztgenannte Überwachungsvorrichtung (16) mit der Vorrichtung zur Regelung des Druckes des Spülmediums steuernd in Verbindung steht.

8. Laserbearbeitungsmaschine nach einem der vorhergehenden Ansprüche, **dadurch gekennzeichnet, dass** als optisches Element mit einer mit Spülmedium beaufschlagbaren Oberfläche (5, 105, 205) ein Auskoppelspiegel (201) an dem Laserresonator und/oder wenigstens ein Umlenkspiegel (101) und/oder wenigstens eine Fokussierlinse (1) vorgesehen ist.

## Claims

1. A laser machining device having at least one optical element (1, 101, 201) arranged in the path of a laser beam (7, 107, 207), which optical element (1, 101, 201) can be acted upon by a flushing medium in a substantially countercurrent-free manner on at least one surface (5, 105, 205) lying in the path of the laser beam (7, 107, 207) by means of a feed device in the form of a nozzle arrangement, the nozzle arrangement having a plurality of nozzle channels (17, 117, 217) lying side by side along the edge of the surface (5, 105, 205) to be acted upon and opening onto that edge, **characterised in that** the medium-carrying nozzle channels (17, 117, 217) of the nozzle arrangement are oriented in such a manner that they diverge in the flow direction and, as they continue in the flow direction, extend like a fan along the surface (5, 105, 205) to be acted upon.

2. A laser machining device according to claim 1, **characterised in that** the openings of the nozzle channels (17, 117, 217) at the edge of the surface (5, 105, 205) to be acted upon lie substantially at the same level viewed in the flow direction.

3. A laser machining device according to either one of the preceding claims, **characterised in that** the nozzle channels (217) have non-uniform cross-sections with regard to shape and/or with regard to size.

4. A laser machining device according to any one of the preceding claims, **characterised in that** nozzle channels (17, 117, 217) having a circular cross-section are provided.

5. A laser machining device according to any one of the preceding claims, **characterised in that** the flow cross-section of the nozzle channels (17, 117, 217) of the nozzle arrangement is provided at a skirt (9, 109, 209) surrounding the surface (5, 105, 205) to be acted upon.

6. A laser machining device according to any one of the preceding claims, **characterised in that** the surface (5, 105, 205) to be acted upon lies in a gas-filled guide chamber for the laser beam (7, 107, 207) (beam guide chamber) and gas of the kind filling the beam guide chamber is provided as the flushing medium.

7. A laser machining device according to any one of the preceding claims, **characterised in that** a device for regulating the pressure of the flushing medium and a device (16) for monitoring the internal pressure of the gas-filled beam guide chamber are provided, and the latter monitoring device (16) is in controlling communication with the device for regulating the pressure of the flushing medium.

8. A laser machining device according to any one of the preceding claims, **characterised in that** an output lens (201) on the laser resonator and/or at least one deflecting mirror (101) and/or at least one focusing lens (1) is provided as the optical element having a surface (5, 105, 205) that can be acted upon by flushing medium.

## Revendications

1. Machine d'usinage au laser avec au moins un élément optique (1, 101, 201) disposé dans le chemin d'un faisceau laser (7, 107, 207), lequel peut être soumis essentiellement sans contre-courant, sur au moins une surface (5, 102, 205) située dans le chemin du faisceau laser (7, 107, 207), à un médium de rinçage par un dispositif d'alimentation prenant la forme d'un dispositif à buses, le dispositif à buses présentant plusieurs canaux d'injection (17, 117, 217) qui débouchent côte à côte le long du bord de la surface à soumettre à un médium de rinçage (5, 102, 205), **caractérisée par le fait que** les canaux d'injection (17, 117, 217) traversés du dispositif à buses divergent dans le sens d'écoulement et, dans leur prolongement dans le sens d'écoulement, s'étendent en éventail le long de la surface à soumettre à un médium de rinçage (5, 102, 205).

2. Machine d'usinage au laser selon la revendication 1, **caractérisée par le fait que** les embouchures des canaux d'injection (17, 117, 217) au bord de la surface à soumettre à un médium de rinçage (5, 102, 205) sont essentiellement situés à la même hauteur vu dans le sens d'écoulement.

3. Machine d'usinage au laser selon l'une des revendications précédentes, **caractérisée par le fait que** les canaux d'injection (217) présentent des sections hétérogènes au point de vue de la forme et/ou de la dimension.

4. Machine d'usinage au laser selon l'une des revendications précédentes, **caractérisée par le fait qu'**il est prévu des canaux d'injection (17, 117, 217) de section circulaire.

5. Machine d'usinage au laser selon l'une des revendications précédentes, **caractérisée par le fait que** la section d'écoulement des canaux d'injection (17, 117, 217) du dispositif à buses est prévue sur un entourage (9) cernant la surface à soumettre à un médium de rinçage (5, 102, 205).

6. Machine d'usinage au laser selon l'une des revendications précédentes, **caractérisée par le fait que** la surface à soumettre à un médium de rinçage (5, 102, 205) est située dans une chambre de guidage du faisceau laser (7, 107, 207) remplie de gaz (chambre de guidage de faisceau) et qu'il est prévu comme médium de rinçage un gaz du type remplissant la chambre de guidage de faisceau.

7. Machine d'usinage au laser selon l'une des revendications précédentes, **caractérisée par le fait qu'**il est prévu un dispositif de régulation de la pression du médium de rinçage ainsi qu'un dispositif (16) de surveillance de la pression intérieure de la chambre de guidage de faisceau remplie de gaz et que ledit dispositif de surveillance (16) est en liaison avec le dispositif de régulation de la pression du médium de rinçage et commande ce dernier.

8. Machine d'usinage au laser selon l'une des revendications précédentes, **caractérisée par le fait qu'**il est prévu comme élément optique avec une surface soumise à un médium de rinçage (5, 102, 205) un miroir de sortie (201) sur le résonateur laser et/ou au moins un miroir de déviation (101) et/ou au moins une lentille de focalisation (1).
